# EUROPEAN PATENT SPECIFICATION

(11) **EP 2 173 615 B1**
(45) Date of publication and mention of the grant of the patent: **14.09.2016**
(21) Application number: 08774435.5
(22) Date of filing: 27.06.2008
(51) Int. Cl.: B64C 3/18

(54) **STIFFENED MULTISPAR TORSION BOX**
VERSTEIFTER MEHRFACHHOLMTORSIONSKASTEN
CAISSON DE TORSION MULTILONGERON RENFORCE

(30) Priority: 28.06.2007 ES 200701810
(43) Date of publication of application: 14.04.2010
(73) Proprietor: Airbus Operations S.L., 28906 Madrid (ES)
(72) Inventor: CRUZ DOMÍNGUEZ, Francisco José, 28027 Madrid (ES); MUÑOZ LÓPEZ, María Pilar, 28903 Getafe Madrid (ES); GARCIA MANZANO, Carlos, 28017 Madrid (ES)
(74) Representative: Elzaburu Marquez, Alberto
(86) International application number: PCT/EP2008/058270
(87) International publication number: WO 2009/000911

(56) References cited:
- WO-A-85/01489
- DE-A1- 4 417 889
- GB-A- 329 968
- GB-A- 382 979
- US-A- 1 388 543
- US-A- 2 014 801
- US-A- 2 116 953
- US-A- 4 162 777
- US-A- 4 671 470
- US-A- 4 782 864
- US-A1- 2004 011 927
- US-A1- 2005 236 524

## Description

### FIELD OF THE INVENTION

The present invention relates to a structure of a stiffened multispar torsion box for aeronautical structures with supporting surfaces.

### BACKGROUND OF THE INVENTION

It is commonly known that the aeronautical industry requires structures which on one hand can support the loads to which they are subjected, complying with high strength and rigidity requirements, and on the other hand are as light as possible. A result of this requirement is the increasingly extended use of composite materials in primary structures, which, well applied, can involve an important weight saving compared to metallic design.

Integrated structures have especially proved to be efficient in this sense. An structure is referred to as integrated when the different structural elements subjected to different stress (shearing stress, normal stress, etc.) are manufactured simultaneously or come from one and the same part. This is another advantage of the use of composite materials, which due to their condition of independent layers which can be stacked in the desired manner, offer the possibility of integrating the structure more and more, which furthermore often causes a cost saving, which is equally essential while competing in the market, as there are less individual parts to be assembled.

In addition, a very integrated structure also involves a series of drawbacks which have to be solved to complete its efficiency. One of them is the little accessibility for assembling the elements in the inside which cannot be integrated, such as the specific system supports, equipment and elements for locally transmitting concentrated loads and optimizing the structure.

There have recently been great efforts to achieve an increasingly higher level of integration in the production of wings in composite material.

The main structure of supporting surfaces of airplanes is formed by a leading edge, a torsion box and a trailing edge. The torsion box is a typical structure formed by an upper panel and a lower panel with thin walls, and front and rear spars. Other structural elements such as ribs, additional spars and longitudinal or transverse stiffening elements can also be found inside the torsion box in some of these components.

Depending on the structural, manufacturing, maintenance and certification requirements etc., all these elements may or may not be essential and may be more or less effective.

The currently most used structure for a torsion box is internally formed by several transverse ribs between the front and rear spars, the main functions of which ribs are: providing torsional rigidity, longitudinally limiting the skins and the stringers so as to discretize the buckling loads, maintaining the shape of the aerodynamic surface and supporting local load introductions resulting from actuator fittings, support bearings and similar devices which are directly secured to the rib.

The document US 2005/0236524 A1 discloses an integrated composite torsion box structure, wherein half-shell structures are integrally formed, said half-shell structures comprising a skin and stiffening elements such as stringers and rib members.

Another structural concept of a torsion box is the "multispar", where the ribs are dispensed with and several spars are introduced. These inner spars can comply with some of the functions that the ribs carry out in the first concept, however, the issue of transmitting very concentrated transverse loads in the support points dispensing with an actual rib is still to be solved, this aspect being necessary given that the pure multispar structure tends to be deformed as a result of the torsion caused by these transverse loads.

US 416277 discloses an aircraft wing box construction including canted sheet metal spar webs continuously tied to the upper and lower skins. Sheet metal intercostals stiffeners of substantially triangular configuration are spaced spanwise along the web to provide shear stiffening for the web and intermittent stabilization for the upper skin. Both the shear web and intercostals stiffeners are fastened to spanwise continuous spar caps which are attached to the upper and lower skins. These caps, supported by the intercostals and webs, provide sufficient stabilization to prevent upper skin buckling up to ultimate design stress with a mimimum of shear webs thereby providing weight savings.

As has been mentioned, the multipar box concept as such does not have much torsional rigidity. It is therefore necessary to optimize the structure in this sense so that it works efficiently, with the additional difficulty that there is little accessibility to later carry out the assembly operations if the structure has been highly integrated.

Innovative design concepts to solve this issue are the object of the present invention.

### Summary of the Invention

The present invention therefore relates to a design concept of fittings facing each other to reinforce structures of multispar torsion boxes, where the lack of actual ribs makes local inputs of load difficult. The main field of application of the invention is that of aeronautical structures with supporting surfaces, although the invention can also be applied to other structures with similar features.

The aim of this invention is the design of structural elements in concentrated load introduction points for a torsion box without ribs. These elements will provide the necessary torsional rigidity to prevent the deformations occurring as a result of local loads resulting from securing and supporting fittings, supports, etc.

Other features and advantages of the present invention will be understood from the following detailed description of an illustrative embodiment of its object in relation to the attached figures.

### Description of the Drawings

Figure 1 shows the torsion box of the horizontal stabilizer of a commercial airplane with a typical known multirib structure.
Figure 2 shows the known configuration of a torsion box in which the supports and fittings are directly joined to the rings, where the rigidity of the structure is maximum.
Figure 3 shows the inside of the wing of a military airplane, with a known structure of a multispar torsion box.
Figure 4 schematically shows a cross-section of the multispar structure of a torsion box and the resulting deformation due to typical known loads.
Figure 5a shows an assembly of angle brackets for stiffening the structure under torsion of a multispar torsion box, not covered by the present invention.
Figure 5b shows an assembly of angle brackets combined with diagonal bars for stiffening the structure under torsion of a multispar torsion box, not covered by the present invention.
Figure 6a shows an example of fittings facing each other with a two-sided joint for stiffening the structure under torsion of a multispar torsion box according to an embodiment of the present invention.
Figure 6b shows an example of counter-fittings with a single-sided joint for stiffening the structure under torsion of a multispar torsion box, not covered by the present invention.
Figure 7 shows the arrangement of the assembly of angle brackets for stiffening the structure under torsion of a multispar torsion box. Figure 8 shows the arrangement of the assembly of angle brackets combined with diagonal bars for stiffening the structure under torsion of a multispar torsion box.
Figure 9 shows the arrangement of fittings facing each other with a two-sided joint for stiffening the structure under torsion of a multispar torsion box according to an embodiment of the present invention.

### Detailed Description of the Invention

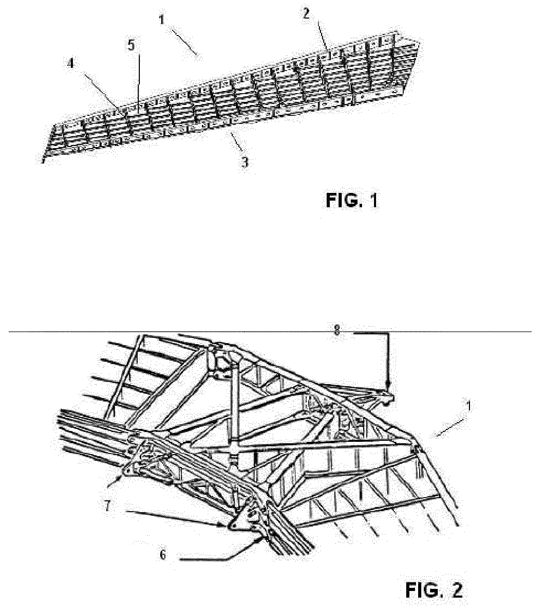

As seen in Figure 1, the currently most used structure for a torsion box 1 is internally formed by several transverse ribs 4 between the front 2 and rear 3 spars, the main functions of which ribs are: providing torsional rigidity, longitudinally limiting the skins and the stringers 5 so as to discretize the buckling loads, maintaining the shape of the aerodynamic surface and supporting local load introductions resulting from stabilizing devices 6, longitudinal linkage supports 7 and support screws 8, which are directly secured to the ribs 4 (Figure 2)

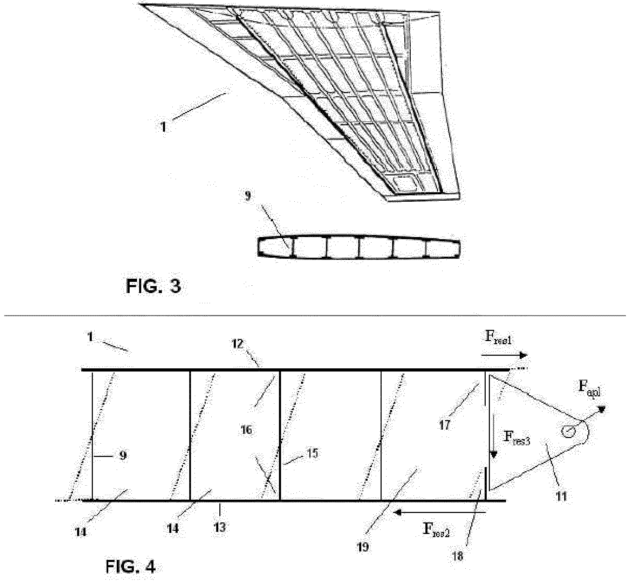

Another structural concept of a torsion box is the "multispar", as shown in Figure 3, where the ribs 4 are initially dispensed with and several spars 9 are introduced. These inner spars can comply with some of the functions that the ribs 4 carry out in the first concept (Figures 1 and 2), however, the issue of transmitting very concentrated transverse loads in the support points dispensing with an actual rib 4 is still to be solved, this aspect being necessary given that the pure multispar structure tends to be deformed as a result of the torsion caused by these transverse loads.

The aim of this invention is therefore the design of structural elements in concentrated load introduction points for a torsion box 1 without ribs 4. These structural elements provide the torsion box 1 with the necessary torsional rigidity to prevent the deformations occurring as a result of local loads resulting from securing and supporting fittings 11, supports, etc.

The multispar 9 torsion box 1 on which the present invention is based is formed by the upper 12 and lower 13 skins, which are the elements closing the box 1 at the upper and lower part, and are characterized by mainly supporting compression-traction and shear loads, Fᵣₑₛ₁, Fᵣₑₛ₂, Fᵣₑₛ₃, in the plane. Stringers 17, 18 have been introduced to achieve sufficient rigidity of the cells 14 of the torsion box 1 and to stabilize them against buckling, without increasing their thickness. The stringers 17, 18 also assume part of the longitudinal flows resulting from bending moments.

In addition, there are multiple spars 9 which, like skins 12 and 13, are typical thin-walled structures. They must mostly support bending and torsion loads. In a simplified manner, the resulting shear flows must be supported by the web 15 of the spar 9, whereas the legs 16 or chords of the spars 9 must support the traction and compression loads resulting from the bending of the torsion box 1.

Therefore, from the structural point of view, the box 1 is formed by:
- Lower skin 13
- Upper skin 12
- Several spars 9, which are in turn formed by:
   - Chord 16
   - Web 15
- Several stringers 17 in the upper skin 12
- Several stringers 18 in the lower skin.

When such a structure 1 is subjected to eccentric transverse loads Fₐₚₗ tends to be deformed as shown in Figure 4. This situation of stress is a typical case in supporting surfaces of aircraft. A traditional rib 4 in these most critical areas would be a way of providing more rigidity and preventing inadmissible deformations, but since the structure 1 is closed, this would not be possible if the rib 4 has not been initially integrated, which makes the whole manufacture of the box 1 enormously difficult.

One solution to this drawback is to introduce unit elements in the first cell 19, this cell 19 being the cell that is closest to the inputs of loads Fₐₚₗ, which cell is open at one side to enable the assembly (see Figure 4). These unit elements must be sufficiently small so that they can later be assembled in the cell 19, while at the same time they must increase the torsional rigidity of the multispar box.

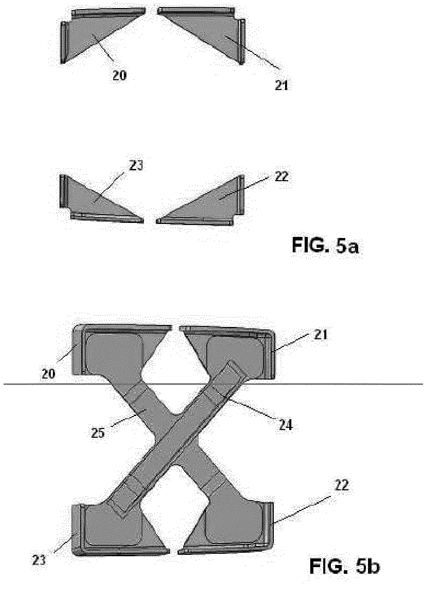

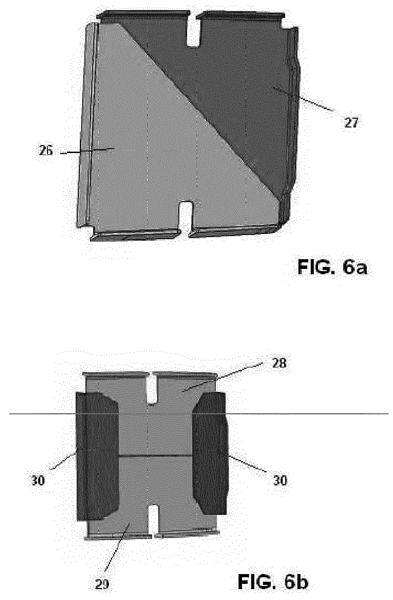

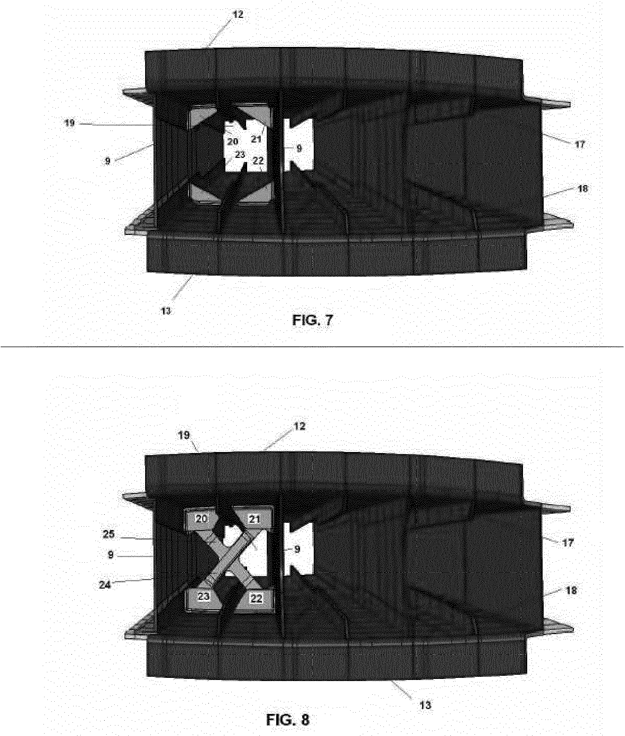

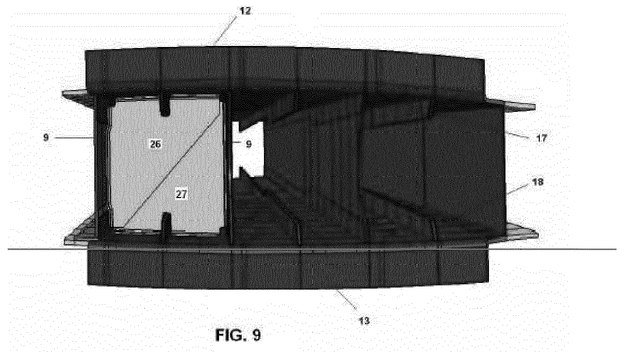

Figures 5a and 5b show an angle bracket 20, 21, 22 and 23 in each corner of the first cell 19 and two bars 24 and 25 joining the angle brackets 20, 21, 22 and 23 diagonally. The side of the first cell 19 is later closed after carrying out the necessary assembly work. It is possible to dispense with the diagonal bars 24 and 25 if they are not necessary (Figure 5a), and both bars 24 and 25 can be designed as a single part to minimize the total number of parts (Figure 5b). The previous placement can be seen in Figures 7 and 8. Figures 6a and 6b show two alternatives of fittings facing each other 26 and 27, and fittings facing each other 28 and 29, combined with angle bars 30. With this latter example, comprising fittings facing each other 28 and 29 combined with angle bars, the total number of parts increases but two-sided joints (i.e., joints to two parts of the structure of the torsion box 1) are prevented, which make the assembly difficult and frequently make it necessary to supplement for meeting the engineering requirements, thus making the product expensive. The placement of fittings facing each other can be seen in Figure 9.

The assembly shown in Figure 6a comprises two fittings facing each other 26 and 27 joined to one another diagonally, each of them being joined to a skin, upper skin 12 and lower skin 13, and to a respective spar 9 (two-sided joint).

## Claims

1. An integrated structure of a composite material multispar torsion box (1) for aircraft, comprising a lower skin (13), an upper skin (12), and several spars (9) defining a plurality of cells (14), **characterized in that** the integrated structure comprises no ribs, wherein the first cell (19) is defined as being the closest one to the inputs of local loads in the box (1) resulting from securing and supporting fittings (11) or supports and being open at one side to enable the assembly, wherein the integrated structure further comprises two fittings facing each other (26, 27) joined to one another diagonally, each of them being joined to a skin (12, 13) and to a respective spar (9) of the first cell (19) of the torsion box (1) in concentrated load introduction points which provide the torsion box (1) with the necessary torsional rigidity to prevent the deformations occurring as a result of said local loads.

## Patentansprüche

1. Integrierte Struktur eines mehrholmigen Verbundmaterial-Torsionskastens (1) für Fluggeräte, die eine untere Außenhaut (13), eine obere Außenhaut (12) und mehrere Holme (9) aufweist, die mehrere Zellen (14) definieren, **dadurch gekennzeichnet, dass** die integrierte Struktur keine Rippen aufweist, wobei die erste Zelle (19) als die nächstgelegene zu den Eingängen lokaler Lasten im Kasten (1) definiert ist, die sich aus dem Befestigen oder Abstützen von Anschlussstücken (11) oder Stützen ergeben, und die an einer Seite offen ist, um den Zusammenbau zu ermöglichen, wobei die integrierte Struktur ferner zwei zueinander weisende Anschlussstücke (26, 27) aufweist, die diagonal miteinander verbunden sind, wobei jedes von ihnen mit einer Außenhaut (12, 13) und mit einem jeweiligen Holm (9) der ersten Zelle (19) des Torsionskastens (1) an Einleitungspunkten konzentrierter Last verbunden sind, und die dem Torsionskasten (1) die notwendige Torsionssteifigkeit verleihen, um die Verformungen zu verhindern, die als Ergebnis der lokalen Lasten auftreten.

## Revendications

1. Structure intégrée d'un caisson de torsion multi-longeron en matériau composite (1) pour avion, comprenant un revêtement inférieur (13), un revêtement supérieur (12) et plusieurs longerons (9) définissant une pluralité de cellules (14), **caractérisée en ce que** la structure intégrée ne comprend pas de nervures, dans laquelle la première cellule (19) est définie comme étant la plus proche des entrées de charges locales dans le caisson (1) provenant des raccords de fixation et de support (11) ou des supports et étant ouverte au niveau d'un côté pour permettre l'assemblage, dans laquelle la structure intégrée comprend en outre des raccords se faisant face (26, 27) assemblés diagonalement entre eux, chacun d'entre eux étant assemblé à un revêtement (12, 13) et à un longeron (9) respectif de la première cellule (19) du caisson de torsion (1) dans des points d'introduction de charge concentrée qui dotent le caisson de torsion (1) de la rigidité à la torsion nécessaire pour empêcher les déformations se produisant à cause desdites charges locales.
